# EUROPÄISCHE PATENTSCHRIFT

(11) **EP 0 840 230 B1**
(45) Veröffentlichungstag und Bekanntmachung des Hinweises auf die Patenterteilung: **18.05.2005**
(21) Anmeldenummer: 97118987.3
(22) Anmeldetag: 30.10.1997
(51) Int. Cl.: G06F 12/06, G06F 7/02, H04L 29/12

(54) **Vorrichtung und Verfahren zur Selektion von Adressenwörtern mittels Demultiplex-Decodierung**
Apparatus and method for selecting address words using demultiplex-decoding
Dispositif et méthode de sélection de mots d'adresse utilisant du décodage de démultiplexage

(30) Priorität: 31.10.1996 DE 19645057
(43) Veröffentlichungstag der Anmeldung: 06.05.1998
(73) Patentinhaber: SGS-THOMSON MICROELECTRONICS GMBH, 85630 Grasbrunn (DE)
(72) Erfinder: Heinrich, Peter, 83533 Edling (DE)
(74) Vertreter: Hirsch, Peter, Dipl.-Ing.

(56) Entgegenhaltungen:
- EP-A- 0 663 635
- US-A- 5 568 647
- US-A- 5 668 525

## Beschreibung

Die Erfindung betrifft eine Vorrichtung und ein Verfahren zur Selektion von Adressenwörtern (wie im Dokument EP-A-0 663 635 beschrieben), die je n Bitstellen aufweisen und der Adressierung von m verschiedenen Empfangsstellen einer digitalen Nachrichtenübertragungseinrichtung dienen, in mindestens einer der Empfangsstellen. Die Vorrichtung umfaßt eine Akzeptanzeinrichtung, mittels welcher für die betrachtete Empfangsstelle akzeptierbare Adressenwörter selektierbar sind.

Es ist heutzutage üblich, bei einem System, das eine oder mehrere Sendestellen und mehrere Empfangsstellen aufweist, ein von einer Sendestelle ausgesendetes Signal an alle Empfangsstellen zu schicken, und zwar über einen gemeinsamen Übertragungskanal, beispielsweise in Form einer Busleitung. Damit die Möglichkeit besteht, von der Sendestelle Nachrichten nur an jeweils eine Empfangsstelle zu schicken, enthalten die von der Sendestelle gesendeten Signale jeweils zusätzlich zu der zu übertragenden Nachricht ein Adressenwort. Dabei ist jeder der Empfangsstellen mindestens ein für sie bestimmtes Adressenwort zugeordnet. Die einzelnen Empfangsstellen weisen Vorrichtungen zur Selektion der ihnen jeweils zugeordneten Adressenwörter auf. Daher kann diejenige Empfangsstelle, für welche die jeweils gesendete Nachricht bestimmt ist, solche Nachrichten aus dem Übertragungskanal entnehmen, welche mit einem für diese Empfangsstellen bestimmten oder akzeptierbaren Datenwort versehen ist.

Gehören zu einer Empfangsstelle mehrere Empfänger, kann man jedem dieser Empfänger ein eigenes Adressenwort zuordnen. Sollen bestimmte Nachrichten von mehreren Empfangsstellen empfangbar sein, kann man so vorgehen, daß jede dieser Empfangsstellen nicht nur ihr eigenes Adressenwort akzeptiert sondern auch weitere Adressenwörter. In diesen Fällen wird die Empfangsstelle so ausgelegt, daß sie mehrere Adressenwörter akzeptieren kann.

Für die Überprüfung, ob das Adressenwort der über den Übertragungskanal, beispielsweise die Busleitung, jeweils gesendeten Nachricht für eine bestimmte Empfangsstelle bestimmt ist oder nicht, wird in der Empfangsstelle das Adressenwort der jeweils gesendeten Nachricht auf Übereinstimmung mit dem dieser Empfangsstelle zugeordneten Datenwort bzw. den dieser Empfangsstelle zugeordneten Datenwörtern verglichen. Dies geschieht herkömmlicherweise mittels Filtern, die genauso wie die Adressenwörter n Bitstellen aufweisen und in denen eine Bitfolge abgelegt ist, die der Bitfolge eines akzeptablen Adressenwortes entspricht. Soll die betrachtete Empfangstelle mehrere Adressenwörter akzeptieren können, benötigt sie soviele Filter mit je n Bistellen, wie Adressenwörter akzeptabel sein sollen. Das Adressenwort jeder der einzelnen Empfangsstelle angebotenen Nachricht wird mit jeder Bitfolge in jedem Filter dieser Empfangsstelle auf Übereinstimmung oder Nicht-Übereinstimmung verglichen. Besteht Übereinstimmung hinsichtlich eines der Filter, wird das gerade empfangene Adressenwort akzeptiert und die diesem Adressenwort beigepackte Nachricht zu Verbrauchereinheiten dieser Empfangsstelle durchgelassen. Stimmt das gerade empfangene Adressenwort nicht mit der in einem der Filter abgelegten Bitfolge überein, wird dieses Adressenwort nicht akzeptiert und gelangt die diesem Adressenwort beigepackte Nachricht nicht zu Verbrauchereinheiten dieser Empfangsstelle.

Verbraucher sind beispielsweise Anzeigevorrichtungen oder Stellglieder.

Für den Vergleich, ob ein empfangenes Adressenwort mit der in dem Filter abgelegten Bitfolge übereinstimmt oder nicht, werden herkömmlicherweise XOR-Verknüpfungsschaltungen verwendet, und zwar pro Bitstelle von Adressenwort und Filter eine. Weist das Adressenwort beispielsweise 12 Bitstellen auf, besitzt auch das Filter 12 Bitstellen und sind für den Vergleich des jeweils empfangenen Adressenwortes mit der in dem Filter abgelegten Bitfolge 12 XOR-Verknüpfungsschaltungen erforderlich. Die Ausgänge sämtlicher XOR-Verknüpfungsglieder werden auf ein OR-Verknüpfungsglied gegeben, das soviele Eingänge aufweist, wie XOR-Verknüpfungsglieder vorhanden sind. An einem Ausgang des OR-Verknüpfungsgliedes erscheint je nach dem, ob zwischen dem gerade empfangenen Adressenwort und dem in dem Filter abgelegten Wort Übereinstimmung besteht oder nicht, der Logikwert "1" oder der Logikwert "0". Der Logikwert "0" am Ausgang des OR-Verknüpfungsgliedes bedeutet somit, daß das gerade empfangene Adressenwort von der betrachteten Empfangsstelle akzeptiert wird, während es nicht akzeptiert wird, wenn am Ausgang des OR-Verknüpfungsgliedes der Logikwert "1" erscheint.

Bei der zuvor betrachteten herkömmlichen Lösung hat jedes der mehreren Filter einer Empfangsstelle eine Filterlänge gleich der Adressenwortlänge. Dies erfordert einerseits Hardware mit einer Kapazität, die man aus Kostengründen mitunter nicht bereitstellen möchte. Andererseits sind zwischen dem Adressenregister, in dem die Adresse für den Filtervergleich zwischengespeichert wird, den Filtern, den für den Vergleich verwendeten XOR-Verknüpfungsgliedern und dem diesen nachgeschalteten OR-Verknüpfungsglied viele Wortleitungen erforderlich. Diese erfordern auf einem Chip einer monolithisch integrierten Halbleiterschaltung viel Platz. Auch XOR-Verknüpfungsglieder sind Schaltungsgruppen, die relativ viel Platz auf einem Halbleiterchip beanspruchen.

Der vorliegenden Erfindung liegt die Aufgabe zugrunde, den Schaltungsaufwand für die Akzeptanzprüfung von empfangenen Adressenwörtern zu reduzieren, insbesondere auf eine Weise, die zur Einsparung von Chipfläche führt.

Eine Lösung dieser Aufgabe besteht in einer Vorrichtung gemäß Anspruch 1 und in einem Verfahren gemäß Anspruch 7. Bevorzugte Ausführungsformen hiervon sind in den abhängigen Ansprüchen angegeben.

Die Erfindung schafft eine Vorrichtung, mittels welcher sich in einer Empfangsstelle einer digitalen Nachrichtenübertragungseinrichtung Adressenwörter selektieren lassen, die je n Bitstellen aufweisen und der Adressierung von m verschiedenen Empfangsstellen der Nachrichtenübertragungseinrichtung dienen. Die Vorrichtung umfaßt eine digitale Akzeptanzeinrichtung, mittels welcher für die betrachtete Empfangsstelle akzeptierbare Adressenwörter selektierbar sind. Die Akzeptanzeinrichtung weist auf:
- eine Adressenwortsegmentiereinrichtung, mittels welcher jedes von der Empfangsstelle empfangene Adressenwort in s Adressenwortsegmente mit je b Segmentbitstellen unterteilbar ist, wobei b = n/s und n ein ganzzahliges Vielfaches von s ist;
- einen Decoder mit einem Decodereingang, dem das Segmentbitmuster des jeweiligen Adressenwortsegmentes des jeweils auf Akzeptanz zu überprüfenden Adressenwortes zur Decodierung nach einem vorbestimmten Decodieralgorithmus zuführbar ist, und einen Decoderausgang, an dem für jedes der möglichen Segmentbitmuster ein nur dieses Segmentbitmuster repräsentierendes Decoderausgangsbitmuster mit 2^{b} Binärstellen abnenmbar ist;
- s je einem der Adressenwortsegmente zugeordnete Filterregister zur Speicherung von Filterregisterbitmustern, von denen jedes einem von all denjenigen Decoderausgangsbitmustern entspricht, die beim Decodieren all derjenigen Segmentbitmuster entstehen, welche im je zugehörigen Adressenwortsegment aller von der betrachteten Empfangsstelle akzeptierbaren Adressenwörter auftreten können;
- eine Vergleichseinrichtung, mittels welcher das aus der Decodierung des Segmentbitmusters des jeweiligen Adressenwortsegmentes hervorgehende Decoderausgangsbitmuster mit dem Inhalt des je zugehörigen Filterregisters daraufhin überprüfbar ist, ob das aus dem jeweiligen Decodiervorgang hervorgegangene Decoderausgangsbitmuster mit einem der in diesem Filterregister gespeicherten Filterregisterbitmuster übereinstimmt oder nicht, und an deren Ausgang jeweils ein Überprüfungsergebnissignal abnehmbar ist, das je nach dem Überprüfungsergebnis ein Übereinstimmungssignal oder ein Nicht-Übereinstimmungssignal ist;
- und eine Auswertungseinrichtung, welche nach der Decodierung aller zu dem jeweils empfangenen Adressenwort gehörender Adressenwortsegmente ein Akzeptanzsignal nur dann liefert, wenn am Ausgang der Vergleichseinrichtung für jedes Adressenwortsegment dieses Adressenwortes ein Übereinstimmungssignal aufgetreten ist.

Möchte man bei der bekannten Akzeptanzprüfungsmethode für eine bestimmte Empfangsstelle beispielsweise zwei verschiedene Adressenwörter akzeptieren, muß man in dieser Empfangsstelle zwei Filter vorsehen, die je eine Filterlänge gleich der Adressenwortlänge aufweisen. Bei einer Adressenwortlänge von beispielsweise 12 Bitstellen benötigt man in diesem Fall 24 Filterstellen. Hinzu kommt eine entsprechend große Anzahl von XOR-Gliedern und von Wortleitungen mit entsprechend hohem Platzbedarf auf dem Halbleiterchip, auf dem sich die Adressenselektionsvorrichtung befindet.

Bei der erfindungsgemäßen segmentweisen Überprüfung der empfangenen Adressenwörter auf Akzeptanz kommt man mit wesentlich weniger Schaltungselementen und mit wesentlich weniger Wortleitungen aus. Nimmt man beispielsweise an, daß jedes Adressenwort eine Adressenwordänge von 12 Bitstellen aufweist und jedes Adressenwort in 6 Adressenwortsegmente à 2 Segmentbitstellen unterteilt ist, benötigt man bei einer bevorzugten Ausführungsform lediglich einen 4-aus-2-Decoder mit zwei Eingangsleitungen und vier Ausgangsleitungen, 4 UND-Glieder, 6 Filterregister à 4 Filterregisterstellen sowie eine Auswertungseinrichtung zur Auswertung der UND-Verknüpfungsergebnisse, die im Prizip wie im herkömmlichen Fall aufgebaut, jedoch wesentlich weniger komplex sind, da sie nicht 32 Vergleichsergebnisse auszuwerten braucht sondern lediglich 4 Vergleichsergebnisse. Es sind keine XOR-Glieder erforderlich, die mehr Schaltungsaufwand und Chipfläche benötigen als UND-Glieder. Diese gewaltige Einsparung an Schaltungseinheiten sowie Wort- und Verbindungsleitungen führt zu einer gewaltigen Reduzierung der für eine solche Selektions- oder Akzeptanzvorrichtung erforderlichen Fläche auf einem Halbleiterchip einer diese Selektionsvorrichtung umfassenden monolithisch integrierten Schaltung.

Bei einer bevorzugten Ausführungsform der Erfindung weist der Decoder b Decodereingangsanschlüsse auf, denen während eines jeden Adressenwortsegments je eines von dessen b Segmentbits zuführbar ist, sowie 2^{b} Decoderausgangsanschlüsse, an denen bei jedem Decodiervorgang ein Binärwertmuster auftritt, derart, daß an einem der Decoderausgangsanschlüsse ein erster Binärwert, beispielsweise "1", und an allen restlichen Decoderausgangsanschlüssen der entgegengesetzte Binärwert, also beispielsweise "0", auftritt. Die Filterregister weisen je 2^{b} Filterregisterstellen auf, die je einem der 2^{b} Decoderausgangsanschlüsse zugeordnet sind, wobei in jedem der Filterregister alle diejenigen Filterregisterstellen der Speicherung des ersten Binärwertes dienen, an deren je zugeordneten Decoderausgangsanschlüssen bei den Segmentbitmustern, die in allen von der betrachteten Empfangsstelle akzeptierbaren Adressenwörtern in dem je zugehörigen Adressenwortsegment auftreten können, der erste Binärwert auftritt, während die restlichen Filterregisterstellen eines jeden Filterregisters der Speicherung des entgegengesetzten Binärwertes dienen. Die Vergleichseinrichtung liefert für das jeweils decodierte Adressenwortsegment dann ein Übereinstimmungssignal, wenn sich in derjenigen Filterregisterstelle des zugehörigen Filterregisters der erste Binärwert befindet, welche zu dem Decoderausgangsanschluß gehört, der den ersten Binärwert des jeweiligen Decoderausgangbitmusters liefert.

Die Adressenwortsegmente des jeweils auf Akzeptanz zu überprüfenden Adressenwortes können den Decodereingangsanschlüssen der Reihe nach in einem Segmenttakt zuführbar sein und die den einzelnen Adressenwortsegmenten zugeordneten Filterregister sind der Reihe nach segmenttaktweise mit der Vergleichseinrichtung verbindbar.

Bei einer Ausführungsform der Erfindung weist die Vergleichseinrichtung 2^{b} UND-Glieder mit je zwei UND-Eingängen und einem UND-Ausgang auf, wobei bei jedem UND-Glied ein erster UND-Eingang mit dem je entsprechenden der Decoderausgangsanschlüsse verbunden ist und ein anderer UND-Eingang mit der je entsprechenden Filterregisterstelle des jeweils mit der Vergleichseinrichtung verbundenen Filterregisters verbindbar ist.

Bei einer Ausführungsform der Erfindung weist die Auswertungseinrichtung auf:
ein ODER-Glied mit 2^{b} ODER-Eingängen, die je mit einem der UND-Ausgänge verbunden sind, und einem ODER-Ausgang, an dem das jeweilige Überprüfungsergebnissignal abnehmbar ist; ein Überprüfungsergebnisregister mit s Ergebnisregisterstellen, in welche segmenttaktweise der Reihe nach die Überprüfungsergebnissignale für die einzelnen Adressenwortsegmente einschreibbar sind; und eine UND-Schaltung mit s UND-Schaltungseingängen, die mit je einer der Ergebnisregisterstellen verbunden sind, und einem UND-Schaltungsausgang, an dem nach der Überprüfung des letzten Adressenwortsegmentes des jeweiligen Adressenwortes im Fall der Akzeptanz des jeweils überprüften Adressenwortes der erste Binärwert und bei Nicht-Akzeptanz der entgegengesetzte Binärwert abnehmbar ist.

Es kann eine Schaltereinrichtung vorgesehen sein, mittels welcher die einzelnen Filterregister segmenttaktweise der Reihe nach mit der Vergleichseinrichtung verbindbar sind.

Die Erfindung macht außerdem ein Verfahren verfügbar zur Selektion von Adressenwörtern, die je n Bitstellen aufweisen und der Adressierung von m verschiedenen Empfangsstellen einer digitalen Nachrichtenübertragungseinrichtung dienen, in mindestens einer der Empfangsstellen. Dabei wird jedes Adressenwort in s Adressenwortsegmente mit je b segmentbitstellen unterteilt, wobei b=n/s und n ein ganzzahliges Vielfaches von s ist; werden für jedes Adressenwortsegment alle Segmentbitmuster, die bei den von der betrachteten Empfangsstelle zu akzeptierenden Adressenwörtern in dem jeweiligen Adressenwort vorkommen können, nach einem vorbestimmten Decodieralgorithmus in ein 2^{b} Binärstellen aufweisendes Binärwertmuster decodiert; werden die Segmentbitmuster der einzelnen Adressenwortsegmente des jeweils empfangenen Adressenwortes in einem Segmenttakt der Reihe nach je nach dem vorbestimmten Decodieralgorithmus in ein 2^{b} Binärstellen aufweisendes Binärwertmuster decodiert; wird das mittels der Decodierung jeweils erhaltene Binärwertmuster mit allen für das jeweilige Adressenwortsegment gespeicherten Binärwertmustern auf Übereinstimmung überprüft; und wird nach Überprüfung aller Adressenwortsegmente eines empfangenen Adressenwortes anhand der Überprüfungsergebnisse für die einzelnen Adressenwortsegmente für dieses Adressenwort eine Bewertung dahingehend durchgeführt, ob es sich bei dem jeweils empfangenen Adressenwort um ein für die betrachtete Empfangsstelle akzeptierbares Adressenwort handelt oder nicht.

Dabei können das bei der Decodierung des jeweiligen Adressenwortsegmentes des empfangenen Adressenwortes erhaltene Binärwertmuster und die für dieses Adressenwortsegment gespeicherten akzeptablen Binärwertmuster bitstellenweise einer UND-Verknüfung unterzogen werden und kann das Überprüfungsergebnis aus dem UND-Verknüfungsergebnis abgeleitet werden. Die für jedes Adressenwortsegment des jeweils empfangenen Adressenwortes erhaltenen UND-Verknüfungsergebnisse können segmentweise gespeichert werden und alle nach der Überprüfung des letzten Adressenwortsegmentes des jeweils empfangenen Adressenwortes gespeicherten UND-Verknüfungsergebnisse können ihrerseits einer UND-Verknüfung unterzogen werden, wobei von deren Verknüpfungsergebnis ableitbar ist, ob das jeweils empfangene Adressenwort von der betrachteten Empfangsstelle akzeptierbar ist oder nicht.

Die Erfindung wird nun anhand von Ausführungsformen näher erläutert. In den Zeichnungen zeigen:
**Fig. 1** eine Ausführungsform einer erfindungsgemäßen Selektionsvorrichtung;
**Fig. 2** ein Beispiel für zwei akzeptierbare Adressenwörter, die in Adressenwortsegmente unterteilt sind;
**Fig. 3** Filterregister mit verschiedenen Speicherinhalten;
**Fig. 4** eine graphische Darstellung des Überprüfungsablaufs für zwei akzeptbierbare Adressenwörter;
**Fig. 5** eine graphische Darstellung eines nicht akzeptierbaren Adressenwortes und eines Überprüfungsablaufs hierfür;
**Fig. 6** eine schematische generelle Darstellung eines Übertragungskanals mit einer Sendestelle und mehreren Empfangsstellen an sich bekannter Art;
**Fig. 7** eine Darstellung einer der Empfangsstellen in Fig. 6;
**Fig. 8** ein Beispiel für zwei von einer Empfangsstelle akzeptierbare Adressenwörter; und
**Fig. 9** eine Filterschaltung herkömmlicher Art.

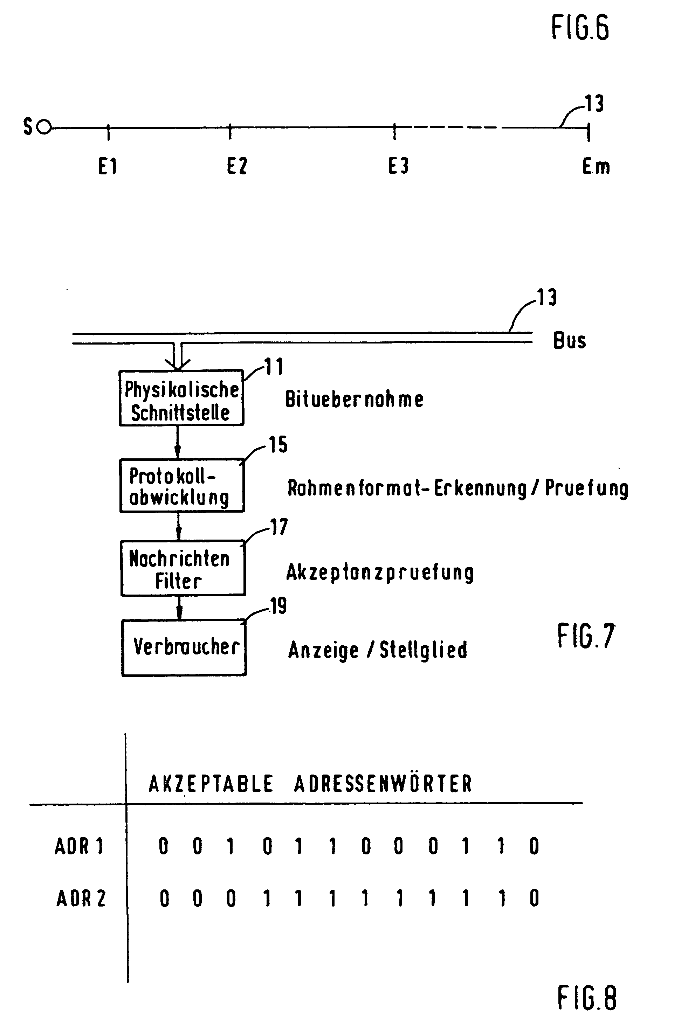

Fig. 6 zeigt in schematisierter Darstellung eine an sich bekannte Nachrichtenübertragungseinrichtung mit einem Sender S, mehreren Empfangsstellen E1, E2, E3 ... Em und einem Bus, mittels welchem der Sender S und die Empfangsstellen E1 ... Em in Reihen- oder in Ringschaltung miteinander verbunden sind. Eine vom Sender S über den Bus übertragene Nachricht gelangt daher an alle Empfangsstellen E1 ... Em. Damit eine vom Sender S gesendete Nachricht selektiv an einzelne Empfangsstellen geschickt werden kann, enthält die ausgesendete Nachricht nicht nur ein aus mehreren Bits zusammengesetztes Nachrichtenwort sondern zusätzlich ein aus einer Anzahl von Bits zusammengesetztes Adressenwort. Jede Empfangsvorrichtung enthält eine Vorrichtung zur Überprüfung, ob das Adressenwort der jeweils gesendeten Nachricht für die jeweilige Empfangsstelle akzeptierbar ist oder nicht. Im Fall der Akzeptanz wird die mit diesem Adressenwort verknüpfte Nachricht von der akzeptierenden Empfangsstelle übernommen.

Fig. 7 zeigt in schematischer Darstellung den bekannten Aufbau einer der Empfangsstellen E1 ... Em. Eine solche Empfangsstelle besitzt eine physikalische Schnittstelle 11, mittels welcher eine Bitübernahme der über einen Bus 13 übertragenen Bitfolge durchgeführt wird. Das Ausgangssignal der physikalischen Schnittstelle 11 wird auf eine sogenannte Protokollabwicklung 15 gegeben, mittels welcher eine Rahmenformat-Erkennung und Rahmenformat-Prüfung durchgeführt wird. An den Ausgang der Protokollabwicklung 15 schließt sich ein Nachrichtenfilter 17 an, mit dem eine Akzeptanzprüfung durchgeführt wird, also eine Prüfung, ob das jeweils übertragene Adressenwort von der betrachteten Empfangsstelle akzeptiert wird oder nicht. Bei Akzeptanz wird die mit dem akzeptierten Adressenwort übertragene Nachricht an einen Verbraucher 19 weitergegeben, bei dem es sich um eine Anzeigevorrichtung, ein Stellglied oder ähnliches handeln kann. Der in Fig. 7 gezeigte Schaltungsaufbau ist an sich bekannt. Die vorliegende Erfindung bezieht sich auf eine Verbesserung des Nachrichtenfilters 17.

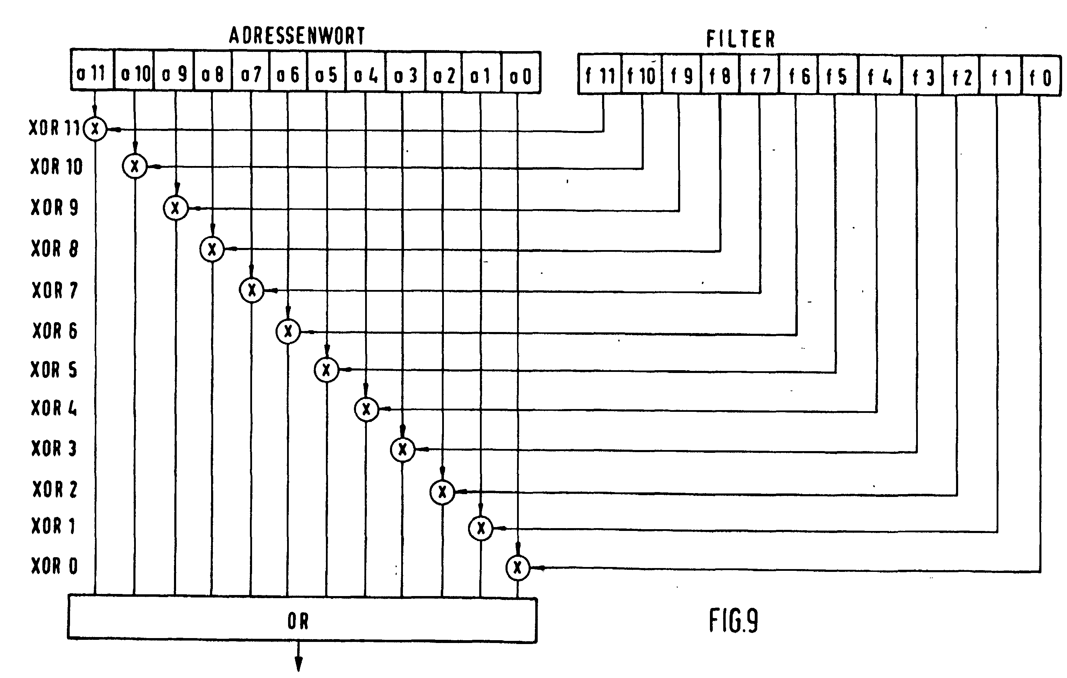

Fig. 8 zeigt ein Beispiel von zwei Adressenwörtern ADR0 und ADR1, die von einer bestimmten Empfangsstelle akzeptiert werden sollen. Fig. 9 zeigt eine praktische Realisierung einer Akzeptanzüberprüfungseinrichtung, wenn es nur ein akzeptierbares Adressenwort gibt und daher nur ein einziges Filter benötigt wird. Bei Anwendung herkömmlicher Nachrichtenfilter zur Akzeptanzüberprüfung von zwei Adressenwörtern wären zwei Filter mit je 12 Filterbitstellen erforderlich, um zu überprüfen, ob es sich bei dem jeweils übertragenen Datenwort um eines der zwei akzeptierbaren Datenwörter oder um ein nicht-akzeptierbares sonstiges Datenwort handelt. Es wären also zwei Filter mit insgesamt 24 Filterstellen erforderlich. Außerdem wird eine entsprechend große Anzahl von XOR-Verknüpfungsschaltungen und von Wortleitungen auf dem Halbleiterchip benötigt, in dem diese Empfangsstelle monolithisch integriert ist.

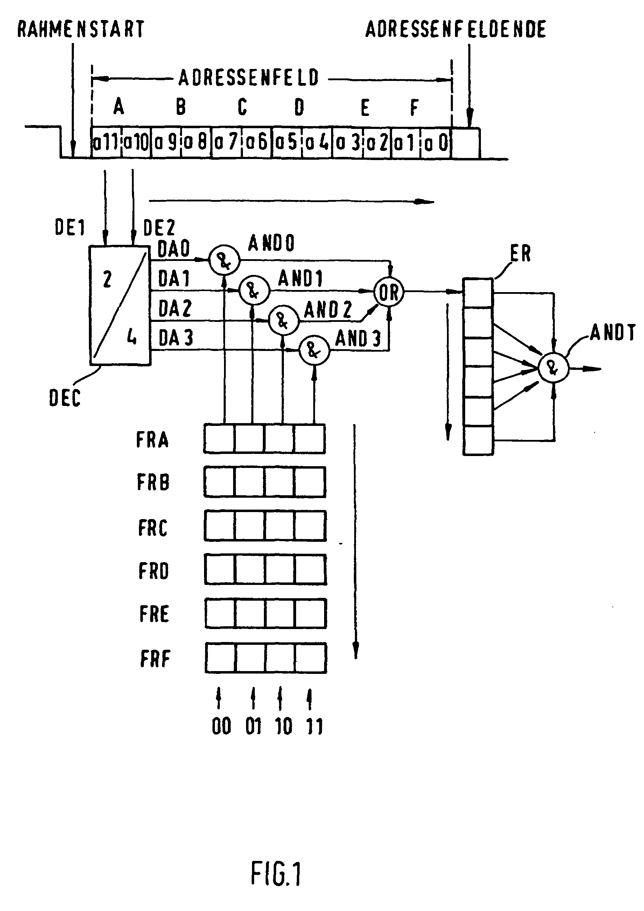

Eine erste Ausführungsform einer erfindungsgemäßen Vorrichtung zur Akzeptanzprüfung oder Selektion von Adressenwörtern ist in Fig. 1 in schematischer Blockdarstellung gezeigt.

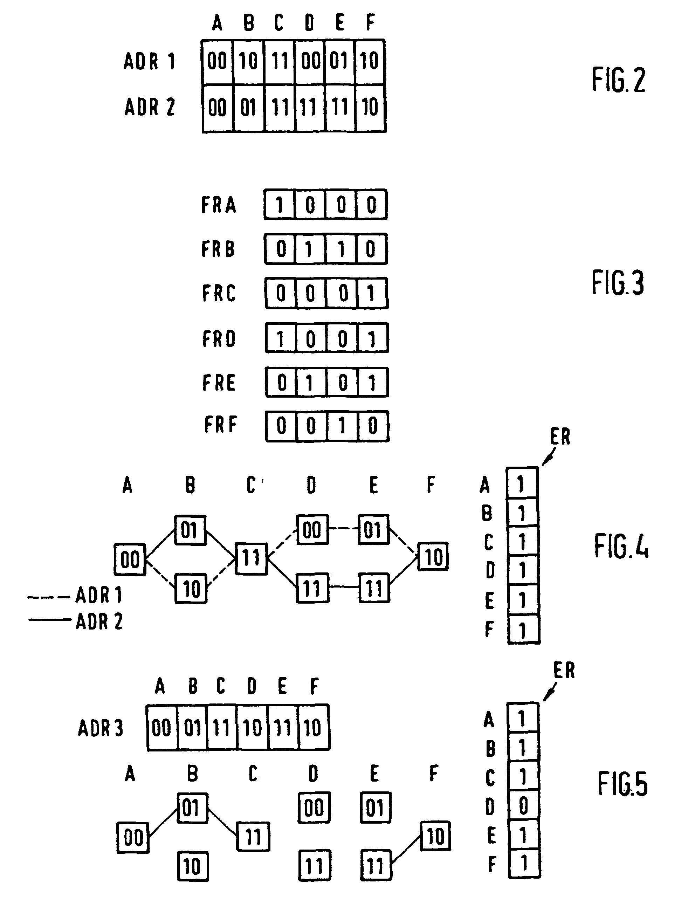

Bei dieser Ausführungsform wird davon ausgegangen, daß jedes Adressenwort aus 12 Bitstellen besteht, jedes Adressenwort in 6 Adressenwortsegmente ä 2 Bitstellen unterteilt ist und die betrachtete Empfangsstelle zwei Adressenwörter akzeptieren soll, wie sie in der in Fig. 2 gezeigten Tabelle als Beispiel angegeben sind.

In Fig. 1 oben ist eine Bitfolge einer rahmenweise übertragenen Nachricht dargestellt, wobei jeder Rahmen ein Rahmenstart-Kennzeichnungsbit, ein Adressenfeld mit 12 Bitstellen, ein Adressenfeldende-Kennzeichnungsbit und daran anschließend ein Nachrichtenwort mit vorbestimmter Bitlänge aufweist.

In Fig. 1 ist von einem derartigen Rahmen im wesentlichen nur das Adressenfeld für ein Adressenwort mit 12 Adressenbitstellen a0 bis a11 und mit einer Unterteilung in 6 Adressenwortsegmente (im folgenden auch kurz Segmente genannt) A bis F mit je zwei Bitstellen dargestellt.

Die in Fig. 1 dargestellte Ausführungsform umfaßt einen 4-aus-2-Decoder DEC mit zwei Decodereingängen DE1 und DE2 und mit vier Decoderausgängen DA0, DA1, DA2 und DA3. Jedem der Decoderausgänge ist ein UND-Glied AND0, AND1, AND2 bzw. AND3 zugeordnet. Es sind 6 Filterregister FRA bis FRF vorgesehen, und zwar für jedes der Adressenwortsegmente A bis F eines. Jedes der Filterregister besitzt vier Filterregisterstellen, die je einem der UND-Glieder AND0 bis AND3 zugeordnet sind. Die Ausgänge der UND-Glieder AND0 bis AND3 sind je mit einem Eingang eines ODER-Gliedes OR verbunden, dessen Ausgang mit der Eingangsseite eines Überprüfungsergebnisregisters ER verbunden ist. Das Überprüfungsergebnisregister weist pro Adressenwortsegment eine Ergebnisregisterstelle auf, also insgesamt sechs Ergebnisregisterstellen. Ein Ausgang einer jeden der Ergebnisregisterstellen ist mit je einem Eingang eines weiteren UND-Gliedes ANDT verbunden. An dessen Ausgang ist ein Akzeptanzsignal abnehmbar, dessen Binärwert davon abhängt, ob das jeweils überprüfte Adressenwort akzeptierbar ist oder nicht.

In Fig. 1 sind unterhalb des Adressenfeldes, seitlich des Überprüfungsergebnisregisters und seitlich der Filterregister je ein Pfeil gezeichnet, mit denen die demultiplexartige segmentweise Abarbeitung des jeweiligen Adressenwortes mit Hilfe des 4-aus-2-Decoders DEC angedeutet ist. Das heißt, den beiden Decodereingängen DE1 und DE2 werden in einem bestimmten Segmenttakt die je zwei Segmentbits der einzelnen Segmente A bis F nacheinander zugeführt. Im gleichen Segmenttakt werden mit den UND-Gliedern AND0 bis AND3 die den einzelnen Segmenten A bis F je zugeordneten Filterregister FRA bis FRF nacheinander verbunden. Und im gleichen Segmenttakt werden die am ODER-Glied OR segmentweise gebildeten Überprüfungsergebnissignale segmenttaktweise nacheinander in Pfeilrichtung in die einzelnen Ergebnisregisterstellen des Übertragungsergebnisregisters ER eingeschrieben. Nach der Überprüfung des letzten Segmentes des jeweils empfangenen Adressenwortes stehen dann an den Ausgängen der 6 Ergebnisregisterstellen die 6 Überprüfungsergebnissignale für die 6 Segmente A bis F zur Verfügung.

Da ein UND-Glied an seinem Ausgang nur dann einen Logikwert "1" abgibt, wenn die seinen beiden Eingängen zugeführten Logikwerte den Logikwert "1" aufweisen, gibt das ODER-Glied OR an seinem Ausgang dann den Logikwert "1" ab, wenn bei der Überprüfung eines Segmente von einem der vier UND-Glieder AND0 bis AND3 der Logikwert "1" abgegeben worden ist, weil dessen beiden Eingängen je dieser Logikwert "1" zugeführt worden ist. Ist das Bitmuster eines Segmentes als ein Bitmuster erkannt worden, das in einem der für die betrachtete Empfangsstelle akzeptierbaren Adressenwörter vorkommen kann, wird also vom ODER-Glied OR in die zu diesem Segment gehörige Ergebnisregisterstelle der Logikwert "1" eingeschrieben, ansonsten der Logikwert "0". Nur dann, wenn für alle Segmente des empfangenen Adressenwortes ein akzeptables Segmentbitmuster festgestellt worden ist, befindet sich in sämtlichen Ergebnisregisterstellen der Logikwert "1". Und nur dann erscheint am Ausgang des UND-Gliedes ANDT ebenfalls der Logikwert "1", was auf Übereinstimmung des empfangenen Adressenwortes mit einem der für die betrachtete Empfangsstelle akzeptablen Adressenwort hinweist. Erscheint am UND-Glied ANDT der Logikwert "0", ist dies der Hinweis darauf, daß das empfangene Adressenwort mit keinem der für die betrachtete Empfangsstelle akzeptablen Adressenwörter übereinstimmt.

Die Funktionsweise der in Fig. 1 gezeigten Ausführungsform wird nun noch anhand der Figuren 2 bis 5 etwas näher betrachtet.

Der Decoder DEC liefert an seinem Decoderausgang DA0 den Logikwert "1", wenn seinen Eingängen DE1 und DE2 das Segmentbitmuster "00" zugeführt wird. Für die ihm eingangsseitig zugeführten Segmentbitmuster "01", "10" und "11" liefert der Decoder DEC einen Logikwert "1" am Decoderausgang DA1 bzw. DA2 bzw. DA3. Bei jedem dieser Segmentbitmuster erscheint an den jeweils drei anderen Decoderausgängen der Logikwert "0".

In jedem der Filterregister FRA bis FRF repräsentiert die Speicherung des Logikwertes "1" in der zum UND-Glied AND0 gehörenden Filterregisterstelle ein Segmentbitmuster "00", während die Speicherung des Logikwertes "1" in einer zu dem UND-Glied AND 1 bzw. AND2 bzw. AND3 gehörenden Registerstelle ein Segmentbitmuster "01" bzw. "10" bzw. "11" repräsentiert.

In Fig. 2 sind zwei für eine bestimmte Empfangsstelle akzeptierbare Adressenwörter ADR1 und ADR2 mit einer Adressenwortlänge von je 12 Bit dargestellt, die je in sechs Segmente A bis F mit je zwei Bitstellen unterteilt sind. Fig. 3 zeigt die Belegung der Filterregister FRA bis FRF für den Fall, daß die beiden in Fig. 2 gezeigten Adressenwörter von der Selektions- bzw. Akzeptanzeinrichtung gemäß Fig. 1 als akzeptierbar bewertet werden sollen. Da beide Adressenwörter ADR1 und ADR2 im Segment A das Segmentbitmuster "00" aufweisen, befindet sich nur in der linken, zum UND-Glied AND0 gehörenden Filterregisterstelle von FRA der Logikwert "1" während sich in den drei restlichen Filterregisterstellen von FRA der Logikwert "0" befindet. Im Segment "B" der beiden akzeptierbaren Adressenwörter ADR1 und ADR2 kann entweder das Segmentbitmuster "10" oder das Segmentbitmuster "01" auftreten. Demgemäß befindet sich der Logikwert "1" sowohl in der zum UND-Glied AND1 als auch in der zum UND-Glied AND2 gehörenden zweiten bzw. dritten Filterregisterstelle von FRB. In dessen beiden restlichen Stellen befindet sich der Logikwert "0". In entsprechender Weise sind in den Filterregistern FRC bis FRF die Logikwerte "1" und "0" eingespeichert.

Fig. 4 zeigt mit gestricheltem Verlauf einen Überprüfungsvorgang, wenn der betrachteten Empfangsstelle das akzeptierbare Adressenwort ADR1 zugeführt wird, und einen durchgezogenen Verlauf eines Überprüfungsvorgangs, wenn der Empfangsstelle das akzeptierbare Adressenwort ADR2 zugeführt wird. Außerdem sind in Fig. 4 die bei jedem dieser beiden Überprüfungsvorgänge in die einzelnen Ergebnisregisterstellen des Überprüfungsergebnisregisters ER eingeschriebenen Logikwerte gezeigt.

Wird das Adressenwort ADR1 empfangen, gibt der Decoder, während seinen Decodereingängen DE1 und DE2 das Segmentbitmuster "00" des Adressenwortsegmentes A zugeführt wird, den Logikwert "1" an seinem Decoderausgang DA0 ab. Da während der Überprüfung des Segmentes A mit den UND-Gliedern AND0 bis AND3 die Filterregisterstellen des Filterregisters FRA verbunden sind, erscheint am Ausgang von AND0 der Logikwert "1" und wird über das ODER-Glied OR der Logikwert "1" in die zum Segment A gehörende Ergebnisregisterstelle des Ergebnisregisters ER geschrieben. Während der Decodierung des Adressenwortsegmentes B sind die Filterregisterstellen von FRB mit AND0 bis AND3 verbunden, wird wegen des Vorhandenseins eines Logikwertes "1" am Decoderausgang DA2 und in der mit AND2 verbundenen Filterregisterstelle von FRB am Ausgang von AND2 der Logikwert "1" erzeugt und in die dem Segment B entsprechende Ergebnisregisterstelle des Überprüfungsergebnisregisters ER geschrieben. Auf die gleiche Weise erfolgt die Überprüfung und Bewertung der weiteren Segmente C bis F.

Wie die zu den einzelnen Adressenwortsegmenten gehörenden Filterregister FRA bis FRF jeweils mit den zugehörigen vier Eingängen der UND-Glieder AND0 bis AND3 verbunden werden, ist in den Figuren nicht dargestellt. Hierfür kann eine steuerbare Schaltereinrichtung verwendet werden, welcher mitgeteilt wird, welches Segment des jeweiligen Adressenwortes jeweils zu überprüfen ist, wobei die Schaltereinrichtung während eines jeden Adressenwortsegmentes derart konfiguriert wird, daß das zum jeweiligen Segment gehörende Filterregister mit den UND-Gliedern AND0 bis AND3 verbunden wird.

Verfolgt man für die beiden akzeptierbaren Adressenwörter ADR1 und ADR2 die in Fig. 4 gezeigten Überprüfungabläufe, sieht man, daß am Ende der Überprüfung des letzten Adressenwortsegmentes F in allen Ergebnisregisterstellen von ER der Logikwert "1" erscheint, was am Ausgang des UND-Gliedes ANDT zu dem auf Akzeptanz hinweisenden Logikwert "1" führt.

In Fig. 5 ist ein Überprüfungsvorgang für ein Adressenwort ADR3 dargestellt, das nicht zu den von der betrachteten Empfangsstelle akzeptierbaren Adressenwörtern gehört. Dieses Adressenwort ADR3 stimmt in allen Segmenten außer dem Segment D mit dem Adressenwort ADR2 überein. Deswegen erscheint an der dem Segment D zugeordneten Ergebnisregisterstelle der Logikwert "0", während in allen anderen Ergebnisregisterstellen der Logikwert "1" erscheint. Wegen des Logikwertes "0" in der zum Segment D gehörenden Ergebnisregisterstelle erscheint am Ausgang des UND-Gliedes ANDT der Logikwert "0", was auf Nicht-Übereinstimmung des Adressenwortes ADR3 mit einem der akzeptablen Adressenwörter ADR1 und ADR2 hinweist und somit Nicht-Akzeptanz des Adressenwortes ADR3 signalisiert.

## Patentansprüche

1. Vorrichtung zur Selektion von Adressenwörtern (ADR1, ADR2, ADR3), die je n Bitstellen aufweisen und der Adressierung von m verschiedenen Empfangsstellen (E1, E2 ... Em) einer digitalen Nachrichtenübertragungseinrichtung dienen, in mindestens einer der Empfangsstellen, mit einer digitalen Akzeptanzeinrichtung, mittels welcher für die betrachtete Empfangsstelle akzeptierbare Adressenwörter (ADR1, ADR2) selektierbar sind und die aufweist:
a) eine Adressenwortsegmentiereinrichtung (DEC), mittels welcher jedes von der Empfangsstelle empfangene Adressenwort in s Adressenwortsegmente (A bis F) mit je b Segmentbitstellen unterteilbar ist, wobei b = n/s und n ein ganzzahliges Vielfaches von s ist;
b) einen Decoder (DEC) mit einem Decodereingang (DE1, DE2), dem das Segmentbitmuster des jeweiligen Adressenwortsegmentes des jeweils auf Akzeptanz zu überprüfenden Adressenwortes zur Decodierung nach einem vorbestimmten Decodieralgorithmus zuführbar ist, und einen Decoderausgang (DA0 bis DA3), an dem für jedes der möglichen Segmentbitmuster ein nur dieses Segmentbitmuster repräsentierendes Decoderausgangsbitmuster mit 2^{b} Binärstellen abnehmbar ist;
c) s je einem der Adressenwortsegmente (A bis F) zugeordnete Filterregister (FRA bis FRF) zur Speicherung von Filterregisterbitmustern, von denen jedes mindestens einem von all denjenigen Decoderausgangsbitmustern entspricht, die beim Decodieren all derjenigen Segmentbitmuster entstehen, welche im je zugehörigen Adressenwortsegment aller von der betrachteten Empfangsstelle akzeptierbaren Adressenwörter auftreten können;
d) eine Vergleichseinrichtung (AND0 bis AND3), mittels welcher das aus der Decodierung des Segmentbitmusters des jeweiligen Adressenwortsegmentes hervorgehende Decoderausgangsbitmuster mit dem Inhalt des je zugehörigen Filterregisters (FRA bis FRF) daraufhin überprüfbar ist, ob das aus dem jeweiligen Decodiervorgang hervorgegangene Decoderausgangsbitmuster mit einem der in diesem Filterregister gespeicherten Filterregisterbitmuster übereinstimmt oder nicht, und an deren Ausgang je ein Überprüfungsergebnissignal abnehmbar ist, das je nach dem Überprüfungsergebnis ein Übereinstimmungssignal ("1") oder ein Nicht-Übereinstimmungssignal ("0") ist; und
e) eine Auswertungseinrichtung (OR, ER, ANDT), welche nach der Decodierung aller zu dem jeweils empfangenen Adressenwort gehörender Adressenwortsegmente ein Akzeptanzsignal ("1") nur dann liefert, wenn am Ausgang der Vergleichseinrichtung (AND0 bis AND3) für jedes Adressenwortsegment (A bis F) dieses Adressenwortes ein Übereinstimmungssignal ("1") aufgetreten ist.

2. Vorrichtung nach Anspruch 1, bei welcher
a) der Decoder (DEC) b Decodereingangsanschlüsse (DE1, DE2), denen während eines jeden Adressenwortsegments (A bis F) je eines von dessen b Segmentbits zuführbar ist, aufweist und 2^{b} Decoderausgangsanschlüsse (DA0 bis DA3), an denen bei jedem Decodiervorgang ein Binärwertmuster auftritt, derart, daß an einem der Decoderausgangsanschlüsse (DA0 bis DA3) ein erster Binärwert ("1") und an allen restlichen Decoderausgangsanschlüssen (DA0 bis DA3) der entgegengesetzte Binärwert ("0") auftritt;
b) die Filterregister (FRA bis FRF) je 2^{b} Filterregisterstellen aufweisen, die je einem der 2^{b} Decoderausgangsanschlüsse (DA0 bis DA3) zugeordnet sind, wobei in jedem der Filterregister (FRA bis FRF) alle diejenigen Filterregisterstellen der Speicherung des ersten Binärwertes ("1") dienen, an deren je zugeordneten Decoderausgangsanschlüssen (DA0 bis DA3) bei den Segmentbitmustern, die in allen von der betrachteten Empfangsstelle akzeptierbaren Adressenwörtern (ADR1, ADR2) in dem je zugehörigen Adressenwortsegment (A bis F) auftreten können, der erste Binärwert ("1") auftritt, während die restlichen Filterregisterstellen eines jeden Filterregisters (FRA bis FRF) der Speicherung des entgegengesetzten Binärwertes ("0") dienen; und
c) die Vergleichseinrichtung (AND0 bis AND3) für das jeweils decodierte Adressenwortsegment dann ein Übereinstimmungssignal ("1") liefert, wenn sich in derjenigen Filterregisterstelle des zugehörigen Filterregisters (FRA bis FRF) der erste Binärwert ("1") befindet, welche zu dem Decoderausgangsanschluß (DA0 bis DA3) gehört, der den ersten Binärwert (" 1") des jeweiligen Decoderausgangsbitmusters liefert.

3. Vorrichtung nach Anspruch 2, bei welcher die Adressenwortsegmente (A bis F) des jeweils auf Akzeptanz zu überprüfenden Adressenwortes den Decodereingangsanschlüssen (DA0 bis DA3) der Reihe nach in einem Segmenttakt zuführbar und die den einzelnen Adressenwortsegmenten (A bis F) zugeordneten Filterregister (FRA bis FRF) der Reihe nach segmentbitweise mit der Vergleichseinrichtung (AND0 bis AND3) verbindbar sind.

4. Vorrichtung nach einem der Ansprüche 1 bis 3, bei welcher eine Schaltereinrichtung vorgesehen ist, mittels welcher die einzelnen Filterregister (FRA bis FRF) segmenttaktweise der Reihe nach mit der Vergleichseinrichtung (AND0 bis AND3) verbindbar sind.

5. Vorrichtung nach Anspruch 3 oder 4, bei welcher die Vergleichseinrichtung 2^{b} UND-Glieder (AND0 bis AND3) mit je zwei UND-Eingängen und einem UND-Ausgang aufweist, wobei bei jedem UND-Glied (AND0 bis AND3) ein erster UND-Eingang mit dem je entsprechenden der Decoderausgangsanschlüsse (DA0 bis DA3) verbunden ist und ein anderer UND-Eingang mit der je entsprechenden Filterregisterstelle des jeweils mit der Vergleichseinrichtung (AND0 bis AND3) verbundenen Filterregisters (FRA bis FRF) verbindbar ist.

6. Vorrichtung nach Anspruch 5, bei welcher die Auswertungseinrichtung aufweist:
a) ein ODER-Glied (OR) mit 2^{b} ODER-Eingängen, die je mit einem der UND-Ausgänge verbunden sind, und einem ODER-Ausgang, an dem das jeweilige Überprüfungsergebnissignal abnehmbar ist;
b) ein Überprüfungsergebnisregister (ER) mit s Ergebnisregisterstellen, in welche segmenttaktweise der Reihe nach die Überprüfungsergebnissignale für die einzelnen Adressenwortsegmente (A bis F) einschreibbar sind; und
c) eine UND-Schaltung (ANDT) mit s UND-Schaltungseingängen, die mit je einer der Ergebnisregisterstellen des Überprüfungsergebnisregisters (ER) verbunden sind, und einem UND-Schaltungsausgang, an dem nach der Überprüfung des letzten Adressenwortsegmentes (A bis F) des jeweiligen Adressenwortes im Fall der Akzeptanz des jeweils überprüften Adressenwortes der erste Binärwert ("1") und bei Nicht-Akzeptanz der entgegengesetzte Binärwert ("0") abnehmbar ist.

7. Verfahren zur Selektion von Adressenwörtern, die je n Bitstellen aufweisen und der Adressierung von m verschiedenen Empfangsstellen einer digitalen Nachrichtenübertragungseinrichtung dienen, in mindestens einer der Empfangsstellen, bei welchem:
a) jedes Adressenwort in s Adressenwortsegmente (A bis F) mit je b Segmentbitstellen unterteilt wird, wobei b=n/s und n ein ganzzahliges Vielfaches von s ist;
b) für jedes Adressenwortsegment (A bis F) alle Segmentbitmuster, die bei den von der betrachteten Empfangsstelle zu akzeptierenden Adressenwörtern in dem jeweiligen Adressenwortsegment vorkommen können, nach einem vorbestimmten Decodieralgorithmus in ein 2^{b} Binärstellen aufweisendes Binärwertmuster decodiert und diese Binärwertmuster gespeichert werden;
c) die Segmentbitmuster der einzelnen Adressenwortsegmente des jeweils empfangenen Adressenwortes in einem Segmenttakt der Reihe nach je dem vorbestimmten Decodieralgorithmus entsprechend in ein 2^{b} Binärstellen aufweisendes Binärwertmuster decodiert werden;
d) das mittels der Decodierung jeweils erhaltene Binärwertmuster mit allen für das jeweilige Adressenwortsegment gespeicherten Binärwertmustern auf Übereinstimmung überprüft wird; und
e) nach Überprüfung aller Adressenwortsegmente eines empfangenen Adressenwortes anhand der Überprüfungsergebnisse für die einzelnen Adressenwortsegmente dieses Adressenwortes eine Bewertung dahingehend durchgeführt wird, ob es sich bei dem jeweils empfangenen Adressenwort um ein für die betrachtete Empfangsstelle akzeptierbares Adressenwort handelt oder nicht.

8. Verfahren nach Anspruch 7, bei welchem das bei der Decodierung des jeweiligen Adressenwortsegmentes des empfangenen Adressenwortes erhaltene Binärwertmuster und die für dieses Adressenwortsegment gespeicherten akzeptablen Binärwertmuster bitstellenweise einer UND-Verknüpfung unterzogen werden und das Überprüfungsergebnis aus dem UND-Verknüpfungsergebnis abgeleitet wird.

9. Verfahren nach Anspruch 8, bei welchem die für jedes Adressenwortsegment des jeweils empfangenen Adressenwortes erhaltenen UND-Verknüpfungsergebnisses segmentweise gespeichert und alle nach der Überprüfung des letzten Adressenwortsegmentes des jeweils empfangenen Adressenwortes gespeicherten UND-Verknüpfungsergebnisse ihrerseits einer UND-Verknüpfung unterzogen werden, wobei von deren Verknüpfungsergebnis abgeleitet wird, ob das jeweils empfangene Adressenwort von der betrachteten Empfangsstelle akzeptierbar ist oder nicht.

## Claims

1. A device for the selection of address words (ADR1, ADR2, ADR3), each having n bit locations and serving for addressing m different receiving locations (E1, E2 ... Em) of a digital communications means, in at least one of the receiving locations, comprising a digital acceptance means by means of which address words (ADR1, ADR2) can be selected which are acceptable for the particular receiving location in consideration, with said acceptance means comprising:
a) an address word segmenting means (DEC) through which each address word received by the receiving location can be subdivided into s address word segments (A to F) with b segment bit locations each, wherein b = n/s and n is an integral multiple of s;
b) a decoder (DEC) having a decoder input (DE1, DE2) adapted to be fed with the segment bit pattern of the respective address word segment of the particular address word to be examined for acceptance, for decoding thereof in accordance with a predetermined decoding algorithm, and having a decoder output (DA0 to DA3) at which, for each of the possible segment bit patterns, a decoder output bit pattern with 2b binary locations representing only this segment bit pattern is available;
c) s filter registers (FRA to FRF) associated with one of the address word segments (A to F) each, for storing filter register bit patterns each corresponding at least to one of all those decoder output bit patterns that are created in decoding of all those segment bit patterns that may occur in the respectively associated address word segment of all address words that are acceptable for the receiving location in consideration;
d) a comparison means (AND0 to AND3) through which the decoder output bit pattern resulting from decoding of the segment bit pattern of the respective address word segment can be compared with the contents of the respectively associated filter register (FRA to FRF), to the effect whether or not the decoder output bit pattern resulting from the respective decoding operation is in conformity with one of the filter register bit patterns stored in this filter register, and at the output of which an examination result signal is available which, in accordance with the particular examination result, is either a conformity signal "1" or a non-conformity signal "0"; and
e) an evaluation means (OR, E, ANDT) which, upon decoding of all address word segments belonging to the respective address word received, delivers an acceptance signal ("1") only when a conformity signal ("1") has been present at the output of the comparison means (AND0 to AND3) for each address word segment (A to F) of this address word.

2. A device according to claim 1,
in which
a) the decoder (DEC) comprises b decoder input terminals (DE1, DE2) adapted to be fed during each address word segment (A to F) with one of the b segment bits thereof each, as well as 2^{b} decoder output terminals (DA0 to DA3) at which a binary value pattern occurs upon each decoding operation, such that a first binary value ("1") occurs at one of the decoder output terminals (DA0 to DA3) and the opposite binary value ("0") occurs at all remaining decoder output terminals(DA0 to DA3);
b) the filter registers (FRA to FRF) each comprise 2^{b} filter register locations associated with one of the 2^{b} decoder output terminals (DA0 to DA3) each, and in each of the filter registers (FRA to FRF) all those filter register locations serve for storing the first binary value ("1") at the respectively associated decoder output terminals (DA0 to DA3) of which occurs the first binary value ("1") for those segment bit patterns which may occur in all address words (ADR1, ADR2) that are acceptable for the receiving location in consideration, in the respectively associated address word segment (A to F), whereas the remaining filter register locations of each filter register (FRA to FRF) serve for storing the opposite binary value ("0"); and
c) the comparison means (AND0 to AND3) delivers a conformity signal ("1") for the respective address word segment decoded, when the first binary value ("1") is present in that filter register location of the associated filter register (FRA to FRF) which belongs to the decoder output terminal (DA0 to DA3) delivering the first binary value ("1") of the respective decoder output bit pattern.

3. A device according to claim 2,
in which the address word segments (A to F) of the particular address word to be examined for acceptance are adapted to be fed to the decoding input terminals (DA0 to DA3) successively in segment clock fashion, and the filter registers (FRA to FRF) associated with the individual address word segments (A to F) are adapted to be connected to the comparison means (AND0 to AND3) successively in segment bit fashion.

4. A device according to any of claims 1 to 3,
in which a switch means is provided through which the individual filter registers (FRA to FRF) are connectable to the comparison means (AND0 to AND3) successively in segment clock fashion.

5. A device according to claim 3 or 4,
in which the comparison means comprises 2^{b} AND elements (AND0 to AND3) each having two AND inputs and one AND output,
and in each AND element (AND0 to AND3) a first AND input is connected to the respectively corresponding one of the decoder output terminals (DA0 to DA3), and another AND input is adapted to be connected to the respectively corresponding filter register location of the respective filter register (FRA to FRF) connected to the comparison means (AND0 to AND3).

6. A device according to claim 5,
in which the evaluation means comprises:
a) an OR element (OR) having 2^{b} OR inputs each connected to one of the AND outputs, and an OR output at which the respective examination result signal is available;
b) an examination result register (ER) having s result register locations into which the examination result signals for the individual address word segments (A to F) can be written successively in segment clock fashion; and
c) an AND circuit (ANDT) having s AND circuit inputs which are connected to one of the result register locations of the examination result register (ER) each, and an AND circuit output at which, upon examination of the last address word segment (A to F) of the respective address word, the first binary value ("1") is available in case of acceptance of the particular address word examined and the opposite binary value ("0") is available in case of non-acceptance.

7. A method of selecting address words, each having n bit locations and serving for addressing m different receiving locations of a digital communications means, in at least one of the receiving locations, in which
a) each address word is subdivided into s address word segments (A to F) each having b segment bit locations, with b=n/s and n being an integral multiple of s;
b) for each address word segment (A to F), all segment bit patterns which, in the address words acceptable for the receiving location in consideration, may occur in the respective address word segment, are decoded in accordance with a predetermined decoding algorithm into a binary value pattern having 2^{b} binary locations, and these binary value patterns are stored;
c) the segment bit patterns of the individual address word segments of the respective address word received are decoded each in accordance with the predetermined decoding algorithm, successively in segment clock fashion, into a binary value pattern having 2^{b} binary locations;
d) the respective binary value pattern obtained by decoding is examined with respect to conformity with all binary bit patterns stored for the respective address word segment; and
e) after examination of all address word segments of an address word received, an assessment is carried out by way of the examination results for the individual address word segments of this address word, as to whether or not the particular address word received is an address word that is acceptable for the receiving location in consideration.

8. A method according to claim 7,
in which the binary value pattern obtained in decoding the respective address word segment of the address word received and the acceptable binary value patterns stored for this address word segment are subjected to an AND operation bit location for bit location, and the examination result thus obtained is derived from the AND operation result.

9. A method according to claim 8,
in which the AND operation results obtained for each address word segment of the respective address word received are stored in segment-wise fashion, and all AND operation results stored after examination of the last address word segment of the respective address word received in turn are subjected to an AND operation, from the result of which it is derived whether or not the respective address word received is acceptable for the receiving location in consideration.

## Revendications

1. Dispositif pour la sélection de mots d'adresse (ADR1, ADR2, ADR3), qui présentent chacun n emplacements binaires et servent à l'adressage de m points de réception différents (E1, E2, ... Em) d'un appareil numérique de transmission d'informations, dans au moins l'un des points de réception, avec un appareil numérique d'acceptation, au moyen duquel des mots d'adresse (ADR1, ADR2) acceptables pour le point de réception considéré peuvent être sélectionnés et qui présente :
a) un appareil de segmentation de mot d'adresse (DEC), au moyen duquel chaque mot d'adresse reçu par le point de réception peut être divisé en s segments de mot d'adresse (A à F) comprenant respectivement b emplacements binaires de segment, b étant égal à n/s et n étant un multiple entier de s ;
b) un décodeur (DEC) avec une entrée de décodeur (DE1, DE2), auquel le modèle de bit du segment de mot d'adresse respectif du mot d'adresse qui est à vérifier au niveau de l'acceptation est amené pour le décodage selon un algorithme de décodage prédéfini, et une sortie de décodeur (DA0 à DA3), sur laquelle on peut prélever un modèle de bit de sortie de décodeur, représentant seulement un modèle de bit de segment, avec deux emplacements binaires pour chacun des modèles possibles de bit de segment ;
c) s registres de filtre (FRA à FRF) attribués chacun à l'un des segments de mot d'adresse (A à F) pour le stockage de modèles de bit de registre de filtre dont chacun correspond au moins à l'un de tous les modèles de bit de sortie de décodeur, qui se forment lors du décodage de tous les modèles de bit de segment, qui peuvent apparaître dans chaque segment correspondant de mot d'adresse de tous les mots d'adresse pouvant être acceptés par le point de réception considéré ;
d) un appareil de comparaison (AND0 à AND3), au moyen duquel le modèle de bit de sortie de décodeur provenant du décodage du modèle de bit de segment du segment correspondant de mot d'adresse peut être comparé ensuite avec le contenu du registre de filtre correspondant (FRA à FRF), pour voir si le modèle de bit de sortie de décodeur provenant de l'opération de décodage respective coïncide ou non avec l'un des modèles de bit de registre de filtre mémorisés dans ce registre de filtre, et à la sortie desquels un signal de contrôle peut être prélevé, lequel est selon le résultat du contrôle un signal de concordance ("1") ou un signal de non-concordance ("0") ; et
e) un appareil d'analyse (OR, ER, ANDT), qui fournit un signal d'acceptation ("1") après le décodage de tous les segments de mot d'adresse faisant partie du mot d'adresse respectivement reçu uniquement dans les cas où le signal de concordance (" 1") est apparu à la sortie de l'appareil de comparaison (ADN0 à AND3) pour chaque segment du mot d'adresse (A à F).

2. Dispositif selon la revendication 1, sur lequel
a) le décodeur (DEC) présente b branchements d'entrée de décodeur (DE1, DE2), à chacun desquels l'un de ses b bits de segment peut être amené pendant chaque segment de mot d'adresse (A à F) et 2^{b} branchements de sortie de décodeur (DA0 à DA3), sur lesquels apparaît un modèle de valeur binaire lors de chaque opération de décodage, de telle sorte qu'une première valeur binaire ("1") apparaît sur l'un des branchements de sortie de décodeur (DA0 à DA3) et la valeur binaire ("0") opposée apparaît sur tous les branchements de sortie de décodeur (DA0 à DA3) restants ;
b) les registres de filtre (FRA à FRF) ont chacun 2^{b} emplacements de registre de filtre, qui sont attribués chacun à l'un des 2^{b} branchements de sortie de décodeur (DA0 à DA3), tous les emplacements de registre de filtre du stockage de la première valeur binaire ("1") servant dans chacun des registres de filtre (FRA à FRF), sur chacun des branchements de sortie de décodeur (DA0 à DA3) desquels, qui leur sont attribués, apparaît la première valeur binaire ("1") avec les modèles de bit de segment qui peuvent apparaître dans tous les mots d'adresse (ADR1, ADR2) pouvant être acceptés par l'emplacement de réception considéré dans le segment de mot d'adresse (A à F), correspondant alors que les emplacements de registre de filtre restants de chaque registre de filtre (FRA à FRF) servent au stockage de la valeur binaire ("0") opposée, et
c) l'appareil de comparaison (AND0 à AND3) fournit un signal de concordance ("1") pour le segment de mot d'adresse respectivement décodé dans les cas où la première valeur binaire ("1") se trouve dans l'emplacement de registre de filtre du registre de filtre (FRA à FRF) correspondant, lequel fait partie du branchement de sortie de décodeur (DA0 à DA3) qui fournit la première valeur binaire ("1") du modèle de bit de sortie de décodeur respectif

3. Dispositif selon la revendication 2, sur lequel les segments de mot d'adresse (A à F) du mot d'adresse à vérifier respectivement au niveau de l'acceptation peuvent être amenés aux branchements d'entrée de décodeur (DA0 à DA3) dans l'ordre dans un cycle de segment et les registres de filtre (FRA à FRF) attribués aux segments de mot d'adresse (A à F) individuels peuvent être reliés dans l'ordre par bit de segment à l'appareil de comparaison (AND0 à AND3).

4. Dispositif selon l'une quelconque des revendications 1 à 3, sur lequel est prévu un dispositif interrupteur, au moyen duquel les registres de filtre (FRA à FRF) individuels peuvent être reliés par cycle de segment dans l'ordre à l'appareil de comparaison (AND0 à AND3).

5. Dispositif selon la revendication 3 ou 4, sur lequel l'appareil de comparaison présente 2^{b} éléments ET (AND0 à AND3) avec respectivement deux entrées ET une sortie ET, une première entrée ET étant reliée pour chaque élément ET (AND0 à AND3) au branchement correspondant des branchements de sortie de décodeur (DA0 à DA3), et une autre entrée ET pouvant être reliée à l'emplacement de registre de filtre correspondant du registre de filtre (FRA à FRF) respectivement relié à l'appareil de comparaison (AND0 à AND3).

6. Dispositif selon la revendication 5, sur lequel l'appareil d'analyse présente :
a) un élément OU (OR) avec 2^{b} entrées OU, qui sont reliées chacune à l'une des sorties ET, et une sortie OU, sur laquelle le signal de résultat de contrôle respectif peut être prélevé ;
b) un registre de résultat de contrôle (ER) avec s emplacements de registre de résultat, dans lesquels les signaux du résultat du contrôle peuvent être inscrits par cycle de segment dans l'ordre pour les segments de mot d'adresse (A à F) individuels ; et
c) un circuit ET (ANDT) avec s entrées de circuit ET, qui sont reliées chacune à l'un des emplacements du registre de résultat du registre de résultat de contrôle (ER), et une sortie de circuit ET, sur laquelle la première valeur binaire ("1") en cas d'acceptation du mot d'adresse contrôlé et la valeur binaire ("0") opposée en cas de non-acceptation peut être prélevée après le contrôle du dernier segment de mot d'adresse (A à F) du mot d'adresse respectif.

7. Procédé pour la sélection de mots d'adresse, qui présentent n emplacements binaires et servent à l'adressage de m emplacements de réception différents d'un système numérique de transmission d'informations, dans au moins l'un des endroits de réception, avec lequel :
a) chaque mot d'adresse est subdivisé en s segments de mot d'adresse (A à F) comprenant chacun b emplacements binaires de segment, b étant égal à n/s et n étant un multiple entier de s ;
b) pour chaque segment de mot d'adresse (A à F), tous les modèles de bit de segment, qui peuvent apparaître dans le segment de mot d'adresse respectif avec les mots d'adresse à accepter par le point de réception considéré, sont décodés selon un algorithme de décodage prédéfini en un modèle de valeur binaire présentant 2^{b} emplacements binaires et ces modèles de valeur binaire sont mémorisés ;
c) les modèles de bit de segment des différents segments de mots d'adresse du mot d'adresse respectivement reçu sont décodés dans un cycle de segment dans l'ordre selon l'algorithme de décodage prédéfini de façon appropriée en un modèle de valeur de codage présentant 2^{b} emplacements binaires ;
d) le modèle de valeur binaire respectivement obtenu lors du décodage est contrôlé au niveau de la concordance avec tous les modèles de valeur binaire mémorisés pour le segment de mot d'adresse respectif ; et
e) après le contrôle de tous les segments de mot d'adresse d'un mot d'adresse reçu, on effectue à l'aide des résultats du contrôle pour les segments de mot d'adresse individuels de ce mot d'adresse une évaluation pour savoir s'il s'agit ou non en ce qui concerne le mot d'adresse respectivement reçu d'un mot d'adresse pouvant être accepté pour le point de réception considéré.

8. Procédé selon la revendication 7, avec lequel le modèle de valeur binaire obtenu lors du décodage du segment de mot d'adresse respectif du mot d'adresse reçu et les modèles de valeur binaire acceptables et mémorisés pour ce segment de mot d'adresse sont soumis pour chaque emplacement binaire à une opération ET et le résultat du contrôle est déduit du résultat de l'opération ET.

9. Procédé selon la revendication 8, avec lequel les résultats de l'opération ET obtenus pour chaque segment de mot d'adresse du mot d'adresse respectivement reçu sont mémorisés par segment et tous les résultats de l'opération ET, mémorisés après le contrôle du dernier segment de mot d'adresse du mot d'adresse respectivement reçu, sont soumis pour leur part à une opération ET, moyennant quoi on déduit du résultat de l'opération si le mot d'adresse respectivement reçu peut être accepté ou non par le point de réception considéré.
